(19) Europäisches Patentamt
European Patent Office
Office européen des brevets

(11) **EP 1 736 974 A2**

(12) **EUROPEAN PATENT APPLICATION**

(43) Date of publication:
   **27.12.2006 Bulletin 2006/52**

(51) Int Cl.:
   **G11B 7/125** (2006.01)     **G02B 27/28** (2006.01)
   **G02B 5/30** (2006.01)

(21) Application number: **06012154.8**

(22) Date of filing: **13.06.2006**

(84) Designated Contracting States:
   **AT BE BG CH CY CZ DE DK EE ES FI FR GB GR
   HU IE IS IT LI LT LU LV MC NL PL PT RO SE SI
   SK TR**
   Designated Extension States:
   **AL BA HR MK YU**

(30) Priority: **14.06.2005 JP 2005174373**

(71) Applicant: **Epson Toyocom Corporation
   Saiwai-ku
   Kawasaki-shi
   Kanagawa 212-8513 (JP)**

(72) Inventor: **Matsumoto, Hiroshi,
   c/o Epson Toyocom Corporation
   Kamiina-gun
   Nagano-ken 399-4696 (JP)**

(74) Representative: **HOFFMANN EITLE
   Patent- und Rechtsanwälte
   Arabellastrasse 4
   81925 München (DE)**

(54) **Optical path compensating device and optical pickup using the device**

(57)     An optical-path compensating device comprises: a first wavelength plate inputting linearly polarized light that includes three different wavelengths $\lambda_1$, $\lambda_2$ and $\lambda_3$ of which polarized directions are the same and optical paths are in parallel; a first birefringent plate inputting the linearly polarized light including the three different wavelengths that were emitted from the first wavelength plate; a second wavelength plate inputting the linear polarized light including the three different wavelengths that transmitted through the first birefringent plate; a second birefringent plate inputting the linear polarized light including the three different wavelengths that were emitted from the second wavelength plate; a third wavelength plate inputting the linear polarized light including the three different wavelengths that transmitted through the second birefringent plate. The first wavelength plate gives a phase difference $2\pi m_1$ to the linearly polarized light including the wavelength $\lambda_1$, a phase difference $\pi(2n_1-1)$ to the linearly polarized light including the wavelength $\lambda_2$ and a phase difference $2\pi q_1$ to the linearly polarized light including the wavelength $\lambda_3$ respectively ($m_1$, $n_1$ and $q_1$ are integers). The first birefringent plate is arranged so as to make the linear polarized light including the wavelength $\lambda_2$ be an ordinary ray and the linear polarized light including the wavelengths $\lambda_1$ and $\lambda_3$ be an extraordinary ray, when these linear polarized light are emitted from the first wavelength plate along the optical axis of the first birefringent plate. The following equation is satisfied:

$$t_1 = d_1 \cdot | (n0^2 \tan\theta + ne^2)/((n0^2 \cdot ne^2)\tan\theta) |,$$

where a distance for compensating an optical path is $d_1$ a refractive index of the birefringent plate to an ordinary ray is n0, a refractive index of the birefringent plate to an extraordinary ray is ne, an angle between an optical axis and a normal line to a main plane of the birefringent plate is $\theta$ and the thickness of the birefringent plate is ti.
The second wavelength plate gives a phase difference $\pi(2m_2-1)$ to the linearly polarized light including the wavelength $\lambda_1$, a phase difference $2\pi n_2$ to the linearly polarized light including the wavelength $\lambda_2$ and a phase difference $2\pi q_2$ to the linearly polarized light including the wavelength $\lambda_3$ respectively ($m_2$, $n_2$ and $q_2$ are integers). The second birefringent plate is arranged so as to make the linear polarized light including the wavelengths $\lambda_1$ and $\lambda_2$ be an extraordinary ray and the linear polarized light including the wavelength $\lambda_3$ be an ordinary ray, where these linear polarized light are emitted from the first wavelength plate along the optical axis of the second birefringent plate. The following equation is satisfied:

$$t_2 = d_2 \cdot | (n0^2 \tan\theta + ne^2)/((n0^2 \cdot ne^2)\tan\theta) |,$$

EP 1 736 974 A2

where a distance for compensating an optical path is $d_2$ a refractive index of the birefringent plate to an ordinary ray is n0,a refractive index of the birefringent plate to an extraordinary ray is ne, an angle between an optical axis and a normal line to a main plane of the birefringent plate is θ and the thickness of the birefringent plate is $t_2$.

The third wavelength plate gives a phase difference $\pi(2m_3-1)$ to the linearly polarized light including the wavelength $\lambda_1$, a phase difference $\pi(2n_3-1)$ to the linearly polarized light including the wavelength $\lambda_2$ and a phase difference $2\pi q_3$ to the linearly polarized light including the wavelength $\lambda_3$ respectively ( $m_3$, $n_3$ and $q_3$ are integers).

OPTICAL PATH
COMPENSATING DEVICE

FIG. 1

**Description**

BACKGROUND

1. Technical Field

The present invention relates to an optical-path compensating device and an optical pick up using the device. In particular, it relates to an optical-path compensating device that compensates the optical path of linear polarized light emitted from a three- wavelength laser device capable of emitting laser beams of three kinds of wavelength and an optical pick up using the device.

2.Related Art

An optical pickup used for an optical disk and an opt magnetic disk device uses two laser beams having different wavelengths in response to different kinds of optical disks such as CD and DVD. This pickup utilizes a two-wavelength monolithic integrated laser device, which comprises two laser beams sources having two different wavelength (650nm and 785 nm for example) on a single semiconductor substrate. These two laser light sources are separated each other with a predetermined distance (several tens to a hundred and several tens $\mu$ m) and emit two parallel beams having different wavelengths, requiring a optical path compensating function so as to transmit two laser beams onto the same optical path.

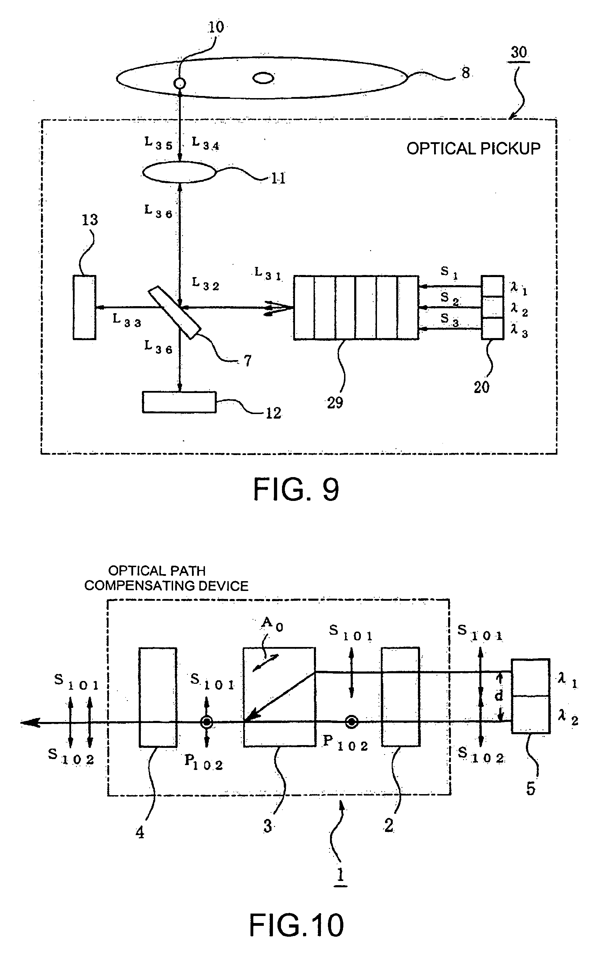

FIG. 10 illustrates a structure of the conventional optical-path compensating device. An optical-path compensating device 1 is provided with a wavelength plate 2, a birefringent plate 3 and a wavelength plate 4 and located in front of a two-wavelength laser device 5.

The two wavelength laser device 5 emits laser light $S_{101}$ having the wavelength 650nm and laser light $S_{102}$ having the wavelength 785 nm that are linearly polarized light of which polarized directions are the same, transmit in parallel each other with the optical path interval d.

The wavelength plate 2 is a birefringent crystal or polymer film and rotates the polarized direction of laser light $S_{102}$ output from the two wavelength laser device 5 by 90 degrees and outputs laser light $S_{101}$ without rotating its polarized direction. This process converts laser light $S_{102}$ into laser light $P_{102}$, linearly polarized light which is orthogonal to laser light $S_{101}$

Namely the second wavelength plate 2 functions as a half wavelength plate for the laser light $S_{102}$ having the wavelength $\lambda_2$. The thickness of it is arranged so as to give a phase difference $2\pi m_{101}$ to the linearly polarized light $S_{101}$, a phase difference $\pi(2n_{101}-1)$ to the linearly polarized light $S_{102}$ respectively ($m_{101}$, $n_{101}$ are integers).

The birefringent plate 3 is made ofa birefringent crystal such as lithum niobate or rutile, or a liquid crystal and the main cross plain of it is in parallel with linear polarized light of the laser light $S_{101}$ but orthogonal to other polarized light of the laser light $P_{102}$.

Here, the laser light $P_{102}$ came from the wavelength plate 2 becomes an ordinary ray toward the optical axis $A_0$, goes straight head and transmits through the birefringent plate 3. On the other hand, the polarized light of the laser light $S_{101}$ ,which is orthogonal to the laser light $P_{102}$, becomes an extraordinary ray toward the optical axis $A_0$, is refracted in the plate and transmits through it. The thickness t of the birefringent plate 3 is adjusted so as to transmit the laser light $S_{101}$ on the optical path, which is the same for the laser light $P_{102}$ when this refracted laser light transmits through the birefringent plate 3.

The wavelength plate 4 is a birefringent crystal or polymer film, and rotates the polarized direction of the laser light $P_{102}$ by 90° and outputs the laser light $S_{101}$ without rotating polarized direction when the laser light $S_{101}$ and the laser light $P_{102}$ which are orthogonal each other, transmit through the birefringent plate 3. This processing converts the laser light $P_{102}$ into laser light $S_{102}$, linear polarized light of which polarized direction is the same for the laser light $S_{101}$.

The wavelength plate 4 functions as a half wavelength plate toward the laser light $P_{102}$ having the wavelength $\lambda_2$. Namely. the thickness of the wavelength plate 4 is arranged so as to generate a phase difference $2\pi \cdot m_{201}$ for the laser light the laser light $S_{101}$ and a phase difference $\pi \cdot (2n_{201} -1)$ for the laser light $P_{102}$ ($m_{201}$ and $n_{201}$ are integers).

Accordingly, this optical path correction device can correct the optical path so that the laser light $S_{101}$ and the laser light $S_{102}$ transmit through the same optical path when the two-wavelength laser device 5 emits the light $S_{101}$ having the wavelength 650nm and the light $S_{102}$ having the wavelength 785nm.

Next, an example of applying the conventional optical-path compensating device to an optical pickup is explained.

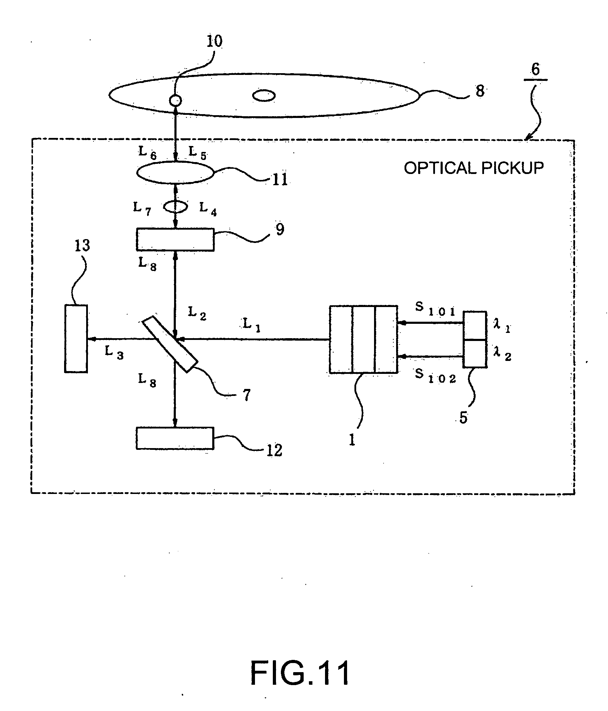

Fig. 11 is a schematic view of applying a conventional optical-path compensating device 1 to an optical pickup. An optical pick up 6 comprises a two-wavelength laser device 5, an optical-path compensating device 1, a half mirror 7, a wavelength plate 9, an objection lens 11, a photo-detecting device 12 and a monitor-photo-detecting device 13. The two wavelengths laser 5 generates linear polarized light including two different wavelengths of which polarized directions are the same and in parallel each other. The optical-path compensating device 1 compensates the optical path so that the laser light $S_{101}$ and the laser light $S_{102}$ transmit through the same optical path when the two wavelengths laser 5 generates these two light. The half mirror 7 separates laser light with the predetermined ratio after outputting laser light from the optical-path compensating device 1. The wavelength plate 9 inputs laser light reflected by 90° at the separating surface of the half mirror 7 and converts it into circularly polarized light. Further, the plate 9 converts the circularly polarized laser light into linear polarized light when light is reflected at an optical disk 8 and passes through an objection lens described later. The objection lens converges circularly polarized laser light emitted from the wavelength plate 9 into a pit 10 formed on the optical disk 8. Further it inputs laser light reflected on the pit 10. The photo detection device 12 detects linearly polarized laser light emitted from the wavelength plate 9 via the half mirror 7. The monitor photo detection device 13 monitors the emission level of the two wavelength laser 5 when light passes through the separation surface of the half mirror 7.

According to Fig.11, the two wavelength laser device 5 emits laser the light $S_{101}$ having the wavelength 650nm and the laser light $S_{102}$ having the wavelength 785 nm that are linearly polarized light of which polarized directions are the same, transmit in parallel each other with the predetermined optical path interval. These laser light enter into the optical-path compensating device 1. The optical-path compensating device 1 compensates the optical path with using a plurality of wavelength plates and birefringent plates so that the laser light $S_{101}$ and the laser light $S_{102}$ transmit through the same optical path when the two wavelengths laser 5 generates these two light. The laser light $S_{101}$ and the laser light $S_{102}$ emitted from the optical-path compensating device 1 are linearly polarized light of which polarized directions are the same, and called as laser light $L_1$.

The laser light $L_1$ emitted from the optical-path compensating device 1 is input to the half mirror 7. The half mirror 7 separates 90% of the laser light $L_1$ as laser light $L_2$, which is reflected by 90 °at the separating surface and also separates 10% of the laser light $L_1$ as laser light $L_3$, which transmits through the separating surface.

Next, the laser light $L_2$ reflected by the half mirror 7 is input into the wavelength plate 9. The wavelength plate 9 functions as a quarter wavelength plate, which makes the phase difference between an ordinary component and an extraordinary component of linearly polarized light be 90 °. Namely the phase of the ordinary component is shifted by 90 ° from the phase of the extraordinary component. These components are integrated after emitting from the wavelength plate 9 to be circularly polarized laser light $L_4$.

The circularly polarized laser light $L_4$ is converged by a convergence lens 11 to be laser light $L_5$, which is irradiated onto the pit 10 formed on the optical disk 8. Then, the circularly polarized laser light $L_5$ is reflected as circularly polarized light rotating reversed direction on the surface of the pit10 based on a mirror symmetry principle. This reflected circularly polarized light $L_6$ is converged by the convergence lens 11 to be laser light $L_7$. The laser light $L_7$ is input to the wavelength plate 9. The plate 9 converts it into the linearly polarized laser light $L_8$ and emits it. The emitted linearly polarized laser light $L_8$ becomes light of which polarized direction is orthogonal to the linearly polarized laser light $L_4$, which was reflected on the half mirror and input to the wavelength plate 9. This conversion of light prevents laser light irradiated on the optical disk 8 and laser light reflected on the optical disk 8 from interfering each other, avoiding deterioration of optical characteristics.

Next, the laser light $L_8$ is input to the half mirror 7 and transmits directly through the half mirror 7 and input to the photo detection device 12, which reads information stored in the optical disk.

On the other hand, a predetermined amount of laser light $L_3$ passed through the half mirror 7 is input to the monitor light detection device 13, which monitors emission level of laser light emitted from the two-wavelength laser device 5. In a optical pickup, it is necessary to maintain the emission level of laser light emitted from a laser element constant. The APC circuit (not shown in the figure) maintains maintain the emission level of laser light constant by controlling a drive circuit of a laser element while a photo detection device for monitoring detects a part of laser light. In the optical pickup shown in Fig.11, a front monitor method, which has high accuracy as a means of monitoring emission level of laser light is applied.

Application Number 2004112507 is an example of related arts.

Recently, in addition to optical disks such as CD and DVD , new optical disks such as Blu-ray disc and HD DVD called as blue laser disk (BD), which have further data storing capability, are shipped into the market. Hence, optical pickups are required to correspond to BD in addition to CD and DVD. Here, in a BD system, it is necessary for components of an optical pickup to address three- wavelengths laser light since a BD uses laser light having around 400nm wavelength and the system has compatibility with a conventional optical pickup using laser light having 660nm wavelength and 785 nm wavelength.

On the other hand, a three- wavelength laser device has been developed recently as a laser diode dealing with the above three kinds of wavelengths. Namely, a single package of the laser device emits laser beams of three kinds of wavelengths 660nm, 785 nm and 405 nm. In this package, three laser sources are placed with a predetermined distance each other and emit parallel beams of three kinds of wavelengths. Here, in this package, optical path compensating function that transmits three laser beams through the same optical path is needed for an optical pickup using three- wavelengths laser device.

However, the optical-path compensating device used in the conventional optical pickup addresses two wavelengths. An optical-path compensating device corresponding to three- wavelengths has been desired if an optical pickup uses three-wavelengths laser device.

SUMAMRY

The advantage of the present invention is to provide an optical-path compensating device that compensates optical paths for laser beams of three kinds of wavelengths laser corresponding to CD, DVD and BD and further provide an optical pickup dealing with three- wavelengths.

According to a first aspect of the invention, an optical-path compensating device comprises: a first wavelength plate inputting linearly polarized light that includes three different wavelengths $\lambda_1$, $\lambda_2$ and $\lambda_3$ of which polarized directions are the same and optical paths are in parallel; a first birefringent plate inputting the linearly polarized light including the three different wavelengths that were emitted from the first wavelength plate; a second wavelength plate inputting the linear polarized light including the three different wavelengths that transmitted through the first birefringent plate; a second birefringent plate inputting the linear polarized light including the three different wavelengths that were emitted from the second wavelength plate; a third wavelength plate inputting the linear polarized light including the three different wavelengths that transmitted through the second birefringent plate. The first wavelength plate gives a phase difference $2\pi m_1$ to the linearly polarized light including the wavelength $\lambda_1$, a phase difference n $(2n_1-1)$ to the linearly polarized light including the wavelength $\lambda_2$ and a phase difference $2\pi q_1$ to the linearly polarized light including the wavelength $\lambda_3$ respectively ($m_1$, $n_1$ and $q_1$ are integers.) The first birefringent plate is arranged so as to make the linear polarized light including the wavelength $\lambda_2$ be a normal light ray and the linear polarized light including the wavelengths $\lambda_1$ and $\lambda_3$ be a abnormal light ray, when these linear polarized light are emitted from the first wavelength plate along the optical axis of the first birefringent plate. The following equation is satisfied:

$$t_1 = d_1 \cdot |(n0^2 \tan \theta + ne^2)/((n0^2 \cdot ne^2) \tan \theta)|,$$

where a distance for compensating an optical path is $d_1$ a refractive index of the birefringent plate to a normal light is n0, a refractive index of the birefringent plate to an abnormal light is ne, an angle between an optical axis and a normal line to a main plane of the birefringent plate is $\theta$ and the thickness of the birefringent plate is $t_1$. The second wavelength plate gives a phase difference $\pi(2m_2-1)$ to the linearly polarized light including the wavelength $\lambda_1$, a phase difference $2\pi n_2$ to the linearly polarized light including the wavelength $\lambda_2$ and a phase difference $2\pi q_2$ to the linearly polarized light including the wavelength $\lambda_3$ respectively ($m_2$, $n_2$ and $q_2$ are integers). The second birefringent plate is arranged so as to make the linear polarized light including the wavelengths $\lambda_1$ and $\lambda_2$ be an extraordinary ray and the linear polarized light including the wavelength $\lambda_3$ be an ordinary ray, where these linear polarized light are emitted from the first wavelength plate along the optical axis of the second birefringent plate. The following equation is satisfied:

$$t_2 = d_2 \cdot |(n0^2 \tan \theta + ne^2)/((n0^2 \cdot ne^2) \tan \theta)|,$$

where a distance for compensating an optical path is $d_2$ a refractive index of the birefringent plate to a normal light is n0, a refractive index of the birefringent plate to an abnormal light is ne, an angle between an optical axis and a normal line to a main plane of the birefringent plate is $\theta$ and the thickness of the birefringent plate is $t_2$. The third wavelength plate gives a phase difference $\pi(2m_3-1)$ to the linearly polarized light including the wavelength $\lambda_1$, a phase difference $\pi(2n_3-1)$ to the linearly polarized light including the wavelength $\lambda_2$ and a phase difference $2\pi q_3$ to the linearly polarized light including the wavelength $\lambda_3$ respectively ($m_3$, $n_3$ and $q_3$ are integers).

The optical-path compensating device of the first aspect may further comprises a grating located at the laser outputting side of the optical-path compensating device , diffracting the input linearly polarized light including different wavelengths to three light beams such as a zero order diffraction light beam and $\pm 1^{st}$ order diffraction light beams.

In the first aspect of the optical-path compensating device, the first wavelength plate, the first birefringent plate, the second wavelength plate, the second birefringent plate, and the third wavelength plate may be attached together and integrated. Further, in the optical-path compensating device of the first aspect, the first wavelength plate, the first birefringent plate, the second wavelength plate, the second birefringent plate, the third wavelength plate, and the grating may be attached together and integrated. Further, in the optical-path compensating device of the first aspect, the first wavelength plate, the second wavelength plate, and the third wavelength plate may be made of birefringent crystals.

In the first aspect of the optical-path compensating device, the first birefringent plate and the second birefringent plate may be made of lithum niobate or rutile.

In the first aspect of the optical-path compensating device, the linearly polarized light including the wavelength $\lambda_1$ may be a laser beam having 660nm wavelength, the linearly polarized light including the wavelength $\lambda_2$ may be a laser beam having 785nm wavelength , and the linearly polarized light including the wavelength $\lambda_3$ may be a laser beam having 405nm wavelength.

In a first aspect of an optical pickup of the invention, it comprises: a light source generating linearly polarized light including three different wavelengths of which polarized directions are the same and optical paths are in parallel; an optical path correction device according to the first aspect of the invention, inputtingthree-linearly polarized light from the light source; a fourth wavelength plate inputting a light beam output from the optical light path; and an objective lens converging light output from the fourth wavelength plate into an optical memory medium.

According to a second aspect of the invention, an optical-path compensating device comprises: a first wavelength plate inputting linearly polarized light that includes three different wavelengths $\lambda_1$ , $\lambda_2$ and $\lambda_3$ of which polarized directions are the same and optical paths are in parallel; a first birefringent plate inputting the linearly polarized light including the three different wavelengths that output from the first wavelength plate; a second wavelength plate inputting the linearly polarized light including the three different wavelengths that transmitted through the first birefringent plate; a second birefringent plate inputting the linearly polarized light including the three different wavelengths that output from the second wavelength plate; a fifth wavelength plate inputting the linearly polarized light including the three different wavelengths that transmitted through the second birefringent plate.

The first wavelength plate gives a phase difference $2\pi m_1$ to the linearly polarized light including the wavelength $\lambda_1$, a phase difference $\pi(2n_1-1)$ to the linearly polarized light including the wavelength $\lambda_2$ and a phase difference $2\pi q_1$ to the linearly polarized light including the wavelength $\lambda_3$ respectively ($m_1$, $n_1$ and $q_1$ are integers). The first birefringent plate is arranged so as to make the linearly polarized light including the wavelength $\lambda_2$ be an ordinary ray and the linearly polarized light including the wavelengths $\lambda_1$ and $\lambda_3$ be a abnormal light beam, where the linearly polarized light including the wavelength $\lambda_2$ outputs from the first wavelength plate along the optical axis of the first birefringent plate. The following equation is satisfied:

$$t_1 = d_1 \cdot | \, (n0^2 \, \tan \theta + ne^2)/((n0^2 \cdot ne^2) \, \tan \theta) \, |,$$

where a distance for compensating an optical path is $d_1$ , a refractive index of the birefringent plate to a normal light is n0,a refractive index of the birefringent plate to an abnormal light is ne, an angle between an optical axis and a normal line to a main plane of the birefringent plate is $\theta$ and the thickness of the birefringent plate is $t_1$.

The second wavelength plate gives a phase difference $\pi(2m_2-1)$ to the linearly polarized light including the wavelength $\lambda_1$, a phase difference $2\pi n_2$ to the linearly polarized light including the wavelength $\lambda_2$ and a phase difference $2\pi q_2$ to the linearly polarized light including the wavelength $\lambda_3$ respectively ($m_2$, $n_2$ and $q_2$ are integers). The second birefringent plate is arranged so as to make the linear polarized light including the wavelengths $\lambda_1$ and $\lambda_2$ be a abnormal light beam and the linear polarized light including the wavelength $\lambda_3$ be an ordinary ray, where these linear polarized light are emitted from the first wavelength plate along the optical axis of the second birefringent plate. The following equation is satisfied:

$$t_2 = d_2 \cdot | \, (n0^2 \, \tan \theta + ne^2)/((n0^2 \cdot ne^2) \, \tan \theta) \, |,$$

where a distance for compensating an optical path is $d_2$, a refractive index of the birefringent plate to a normal light is n0,a refractive index of the birefringent plate to an abnormal light is ne, an angle between an optical axis and a normal line to a main plane of the birefringent plate is $\theta$ and the thickness of the birefringent plate is $t_2$. The fifth wavelength plate generates a phase difference $\pi/2 \cdot (2r-1)$ (r is an integer) for linearly polarized light having wavelengths $\lambda_1$, $\lambda_2$ and $\lambda_3$.

In the second aspect of the optical-path compensating device, it may further comprise a grating located at the laser outputting side of the optical-path compensating device , diffracting the input linearly polarized light including different wavelengths to three light beams such as a zero order diffraction light beam and $\pm 1^{st}$ order diffraction light beams.

In the second aspect of the optical-path compensating device, the first wavelength plate, the first birefringent plate, the second wavelength plate, the second birefringent plate and the fifth wavelength plate may be attached together and integrated.

In the second aspect of the optical-path compensating device, the first wavelength plate, the first birefringent plate, the second wavelength plate, the second birefringent plate, the third wavelength plate, the fifth wavelength plate, and the grating are attached together and integrated.

In the second aspect of the optical-path compensating device, the first wavelength plate, the second wavelength plate, and the fifth wavelength plate may be made of birefringent crystals.

In the second aspect of the optical-path compensating device, the first birefringent plate and the second birefringent plate may be made of lithum niobate or rutile.

In the second aspect of the optical-path compensating device, the linearly polarized light including the wavelength $\lambda_1$ may be a laser beam having 660nm wavelength, the linearly polarized light including the wavelength $\lambda_2$ may be a laser beam having 785nm wavelength, and the linearly polarized light including the wavelength $\lambda_3$ may be a laser beam having 405nm wavelength.

In a second aspect of the optical pickup of the invention, it comprises: a light source generating linearly polarized light including three different wavelengths of which polarized directions are the same and optical paths are in parallel; an optical path correction device according to the second aspect of the invention, inputtingthree-linearly polarized light from the light source; an objective lens converging light output from the optical path correction device into an optical memory medium.

In the first aspect of the invention, an optical path correction device can correct optical paths for linearly polarized light having three different wavelengths of which polarized direction is the same, transmitting through the same optical path. This device is used for an optical pickup corresponding to an optical disk called as a BD in addition to the conventional CD and DVD and shows great advantages for three- wavelength laser device.

Further, in the first and second aspects of the invention, a grating is added to the output side of the optical path correction device, making output laser light become three light beams. This structure make it possible to identify light for reading and writing data irradiated onto a bit and light for tracking irradiated onto the groove on both sides of the pit when laser light is irradiated onto a optical disk for reproducing an optical disk, giving great contribution for an optical pickup.

In the first and second aspects of the invention, optical components comprising the optical-path compensating device are attached and integrated, downsizing the device and reducing manufacturing cost and giving great contribution for an optical pickup.

In the first and second aspects of the invention, laser light emitting from the optical-path compensating device is circularly polarized light, removing a quarter wavelength plate used for an optical pickup, downsizing the pickup and greatly reducing its manufacturing cost.

BRIEF DESCRIPTION OF THE DRAWINGS

The invention will be described with reference to the accompanying drawings, wherein like numbers reference like:

Fig. 1 is a perspective view showing an optical-path compensating device according to a first embodiment of the invention.

Fig. 2 is a schematic view of applying the optical-path compensating device 14 of the invention to an optical pick up.

Fig. 3 is a perspective view showing an optical-path compensating device according to a second embodiment of the invention.

Fig.4 shows an example in which laser light is turned to three beams by adding the grating.

Fig. 5 is a schematic view of applying the optical-path compensating device 23 of the invention to an optical pick up.

Fig. 6 is a perspective view showing an optical-path compensating device according to a third embodiment of the invention.

Fig. 7 is a schematic view of applying the optical-path compensating device 26 of the invention to an optical pick up.

Fig. 8 is a perspective view showing an optical-path compensating device according to a fourth embodiment of the invention.

Fig. 9 is a schematic view of applying the optical-path compensating device 29 of the invention to an optical pick up.

Fig. 10 illustrates a structure of the conventional optical-path compensating device.

Fig. 11 is a schematic view of applying a conventional optical path correction device 1 to an optical pick up.

DESCRIPTION OF EXEMPLARY EMBODIMENTS

Embodiments of the invention will now be described with reference to the accompanying drawings.

The optical-path compensating device of the invention uses two birefringent plates. A first birefringent plate makes laser light having two wavelengths $\lambda_1$, and $\lambda_2$ ,which are emitted from the three- wavelength laser device, transmit through the same optical path. Next, a second birefringent plate makes laser light having two wavelengths $\lambda_1$, and $\lambda_2$

and laser light having the wavelength $\lambda_3$ which are emitted from the three- wavelength laser device, transmitting through the same optical path.

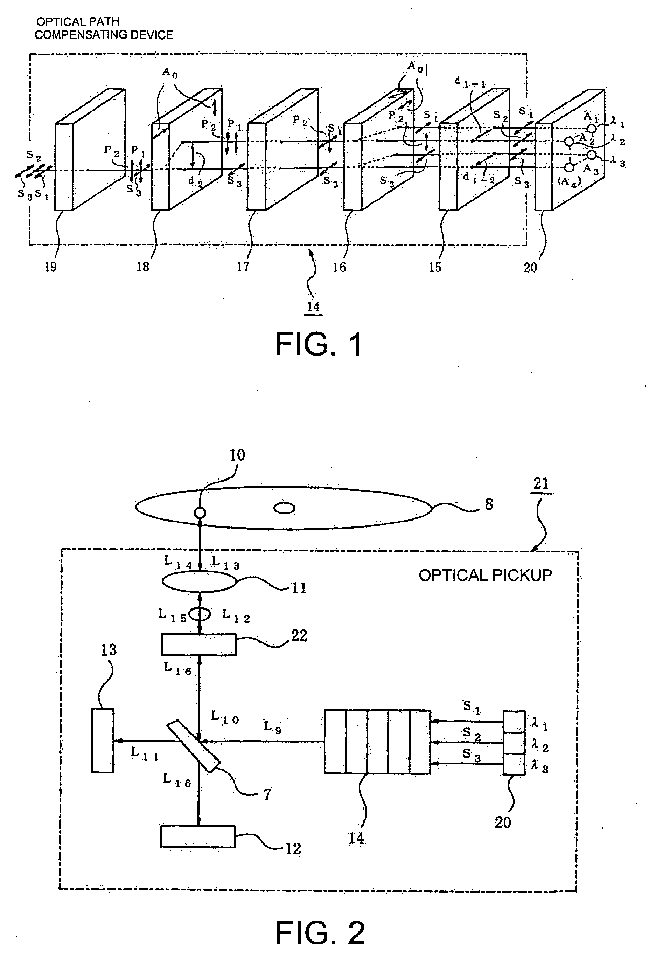

Fig. 1 is a perspective view showing an optical-path compensating device according to a first embodiment of the invention. A optical-path compensating device 14 comprises a first wavelength plate 15, a birefringent plate 16, a second wavelength plate 17, a birefringent plate 18 and a third wavelength plate 19, and is placed in front of a three-wavelength laser device 20. In the embodiment, as shown in Fig.1, three-laser sources are placed as the three- wavelength laser device 20 at three points $A_1$, $A_2$ and $A_3$ of four corners $A_1, A_2$ , $A_3$ and $A_4$. A red laser source emitting laser light having the wavelength $\lambda_1$ =660nm is placed at the point $A_1$, a infrared laser source emitting laser light having the wavelength $\lambda_2$ =785 nm is placed at the point $A_2$, and a blue violet laser source emitting laser light having the wavelength $\lambda_3$ =405 nm is placed at the point $A_1$, fore example. The distances between $A_1$ and $A_2$ ,and $A_3$ and $A_4$ are the same.

Namely, the three- wavelength laser device 20 emits laser light $S_1$ having the wavelength 650nm and laser light $S_2$ having the wavelength 785 nm and laser light $S_3$ having the wavelength 405nm that are linearly polarized light of which polarized directions are the same.

The laser light $S_1$ and the laser light $S_2$ transmit in parallel each other on the optical paths with an optical path interval $d_{1-1}$ and the laser light $S_3$ transmits in parallel to the optical path lead from the point $A_4$ explained above with an optical path interval $d_{1-2}$

The first wavelength plate 15 is made of a birefringent crystal or a polymer film. It rotates the polarized direction of the laser light $S_2$ output from the three- wavelength laser device 20 by 90 degrees and outputs the laser light $S_1$ without rotating its polarized direction, making the polarized direction of the laser light $S_2$ be orthogonal to that of the laser light $S_1$ and $S_3$. The wavelength plate 15 is a half wavelength plate for laser light $S_2$ having the wavelength $\lambda_2$. Namely the thickness of the plate 15 is arranged so as to give a phase difference $2\pi m_1$ to the laser light $S_1$, a phase difference $\pi(2n_1-1)$ to the laser light $S_2$ and a phase difference $2\pi q_1$ to the laser light $S_3$ ($m_1$, $n_1$ and $q_1$ are integers). Next, the birefringent plate 16 is made of birefringent crystal such as lithum niobate or rutile and the main cross plane of it is in parallel with linearly polarized light of the laser light $S_1$ and $S_3$ but orthogonal to other polarized light of the laser light $P_2$.

Here, the laser light $P_2$ came from the first wavelength plate 15 becomes an ordinary ray toward the optical axis $A_0$ and goes straight head and transmits through the birefringent plate 16. On the other hand, the linearly polarized light of the laser light $S_1$, which is orthogonal to the laser light $P_2$, becomes an extraordinary ray toward the optical axis $A_0$, is refracted in the plate and transmits through it. Here, the thickness $t_{1-1}$ of the birefringent plate 16 is adjusted so as to transmit the refracted laser light $S_1$ on the optical path, which is the same for laser light $P_2$ and has the optical path interval $d_{1-1}$.

On the other hand, the linearly polarized light of the laser light $S_3$ becomes abnormal light toward the optical axis $A_0$ and transmits through the plate 16. Here, the thickness $t_{1-2}$ of the birefringent plate 16 is adjusted so as to transmit the refracted laser light $S_3$ on the optical path, which is lead from the point $A_4$ in the three- wavelength laser device 20 and has the interval $d_{1-2}$. with the optical path of the laser $S_3$. In the embodiment, $d_{1-1}$ is equal to $d_{1-2}$ as described the above. Further, in the first birefringent plate 16, when the optical path intervals are $d_1 = d_{1-1} = d_{1-2}$, and thicknesses are $t_1 = t_{1-1} = t_{1-2}$, the following formula (1) is satisfied:

$$t_1 = d_1 \cdot |(n0^2 \tan\theta + ne^2)/((n0^2 - ne^2)\tan\theta)|, \quad \cdots\cdots(1)$$

Here, a refractive index of the birefringent plate to an ordinary ray is n0,a refractive index of the birefringent plate to an extraordinary ray is ne, an angle between an optical axis and a normal line to a main plane of the birefringent plate is $\theta$, which is set to 45 degree in general.

Next, these laser light $S_1$, $P_2$ and $S_3$ are input to the second wavelength plate 17. The second wavelength plate 17 is made of a birefringent crystal or a polymer film similar to the first wavelength plate 15. It rotates the polarized direction of the laser light $S_1$ transmitted through the first birefringent plate 16 by 90 degrees and outputs the laser light $P_2$ without rotating its polarized direction, making the laser light $S_1$ be the linearly polarized light of the laser light $P_1$ of which polarized direction is the same of the laser $P_2$.

Namely the second wavelength plate 17 functions as a half wavelength plate for the laser S1 having the wavelength $\lambda1$. The thickness of the second wavelength plate 17 is arranged so as to give a phase difference $\pi(2m_2-1)$ to the laser light $S_1$, a phase difference $2\pi n_2$ to the laser light $S_2$ and a phase difference $2\pi q_2$ to the laser light $S_3$ ($m_2$, $n_2$ and $q_2$ are integers).

Next, these laser light $P_1$, $P_2$ and $S_3$ emitted from the second wavelength plate 17 are input to the second birefringent plate 18. The second birefringent plate 18 is made of a liquid crystal or a crystal such as lithum niobate or rutile similar to the first birefringent plate 16. It's main cross plane is in parallel with the linearly polarized light of these laser light $P_1$ and $P_2$ but orthogonal to other polarized light of the laser light $S_3$.

Here, the laser light $S_3$ came from the first wavelength plate 17 becomes an ordinary ray toward the optical axis $A_0$ and goes straight head and transmits through the birefringent plate 18. On the other hand, the polarized light of these laser light $P_1$ and $P_2$, which is orthogonal to the laser light $S_3$, becomes an extraordinary ray toward the optical axis $A_0$, is refracted in the plate and transmits through it. The thickness $t_2$ of the birefringent plate 18 is adjusted so as to transmit these refracted laser light $P_1$ and $P_2$ on the optical path, which is the same for the laser light $S_3$ when this refracted laser transmits through the birefringent plate 18.

Here, the following formula (2) is satisfied among the thickness $t_2$, these laser light $P_1$ $P_2$ and $S_3$ and optical path interval $d_2$:

$$t_2 = d_2 \cdot |(n0^2 \tan \theta + ne^2)/((n0^2 - ne^2) \tan \theta)|, \quad \cdots\cdots(2)$$

Here, a refractive index of the birefringent plate to an ordinary ray is n0, a refractive index of the birefringent plate to an extraordinary ray is ne, an angle between an optical axis and a normal line to a main plane of the birefringent plate is θ, which is preferably set to 45 degree in general.

Next, these laser light $P_1$, $P_2$ and $S_3$ passed through the second birefringent plate 18 are input to the third wavelength plate 19. The third wavelength plate 19 is made of a birefringent crystal or a polymer film similar to the second wavelength plate 17. It rotates the polarized direction of these laser light $P_1$ and $P_2$ transmitted through the second birefringent plate 18 by 90 degrees and outputs the laser light $S_3$ without rotating its polarized direction, converting these laser light $P_1$ and $P_2$ into laser light $S_1$ and $S_2$ of which polarized direction is the same of the laser light $S_3$ and making all three laser light be linearly polarized light of which polarized directions are the same.

The third wavelength plate 19 is a half wavelength plate for these laser light $P_1$ and $P_2$ having the wavelength $\lambda_1$ and $\lambda_2$ respectively. Namely the thickness of the plate 18 is arranged so as to give a phase difference $\pi(2m_3-1)$ to the laser light $S_1$, a phase difference $n(2n_3 -1)$ to the laser light $S_2$ and a phase difference $2\pi q_3$ to the laser light $S_3$ ($m_3$, $n_3$ and $q_3$ are integers).

As described above, the optical-path compensating device of the embodiment transmits laser beams of three kinds of wavelengths laser light on the same optical path and makes all three emitted laser light be linearly polarized light of which polarized directions are the same.

Here, in Fig.1 showing the operation of the optical-path compensating device, optical components constituting the optical-path compensating device 14 are placed with predetermined intervals. But, these optical components constituting the optical-path compensating device 14 may be attached and integrated to be a multi - layered structure in order to be downsized.

Further, when a new laser source is formed at the point $A_4$ of the three — wavelength laser device described above in order to realize four wavelength laser device, it is possible for the optical-path compensating device 14 of the invention to emit and transmit four different wavelengths laser light in parallel, of which optical paths are the same.

Next, an example of applying the optical-path compensating device of the invention to an optical pick up is explained. Fig. 2 is an schematic view of applying the optical-path compensating device 14 of the invention to an optical pick up. An optical pick up 21 comprises a three wavelength laser device 20, an optical-path compensating device 14, a half mirror 7, a fourth wavelength plate 22, an objection lens 11, a photo-detecting device 12 and a monitor-photo-detecting device 13. The three- wavelength laser device 20 generates linearly polarized light including three different wavelengths of which polarized directions are the same and transmit in parallel each other. The optical-path compensating device 14 corrects the optical path so that these laser light $S_1$ $S_2$ and $S_3$ transmit through the same optical path when the three- wavelength laser device 20 generates these three light. The half mirror 7 separates laser light with the predetermined ratio after laser light output from the optical path correction device 14. The fourth wavelength plate 22 inputs laser light reflected by 90° at the separating surface of the half mirror 7 and converts it into circularly polarized light. Further, the plate 22 converts circularly polarized laser light into linearly polarized light when light is reflected at an optical disk 8 and passes through an objection lens described later. The objection lens 11 converges circularly polarized laser light emitted from the fourth wavelength plate 22 into a pit 10 formed on the optical disk 8. Further it inputs laser light reflected on the pit 10. The photo-detecting device 12 detects linearly polarized laser light emitted from the fourth-wavelength plate 22 via the half mirror 7. The monitor-photo-detecting device 13 monitors the emission level of the three wavelength laser device 20 when light passes through the separation surface of the half mirror 7.

According to Fig.2 the three- wavelength laser device 20 emits the laser light $S_1$ having the wavelength 650nm and the laser light $S_2$ having the wavelength 780 nm and the laser light $S_3$ having the wavelength 405nm that are linearly polarized light of which polarized directions are the same. These laser light $S_1S_2$ and $S_3$ transmit in parallel with predetermined intervals and are input into the optical-path compensating device 14. The optical-path compensating device 14 as described above compensates the optical path by using a plurality of wavelength plates and birefringent plates so that these laser light $S_1$, $S_2$ and $S_3$ transmit through the same optical path when the three- wavelength laser device 20 generates these three light. These laser light $S_1$ $S_2$ and $S_3$ emitted from the optical-path compensating device 14 are linearly polarized light of which polarized directions are the same, and called as laser light $L_9$.

The laser light $L_9$ emitted from the optical-path compensating device 14 is input to the half mirror 7. The half mirror 7 separates 90% of the laser light $L_9$ as laser light $L_{10}$, which is reflected by 90 °at the separating surface and also separates 10% of the laser light $L_9$ as laser light $L_{11}$, which transmits through the separating surface. At this time, laser light entered into the half mirror 7 is linearly polarized light having three- wavelengths of which polarized direction is the same. Hence, the transmission rate of these three- wavelengths is the same since the separation surface composed of an optical thin film formed in the half mirror 7 does not have wavelength dependency toward linearly polarized light of which polarized direction is the same.

Next, the laser light $L_{10}$ reflected by the half mirror 7 is input into the fourth wavelength plate 22. The fourth wavelength plate 22 functions as a quarter wavelength plate, which shifts a phase by 90 degrees, making three- wavelengths be circularly polarized laser light $L_{12}$. The circularly polarized laser light $L_4$ emitted from the fourth wavelength plate 22 is converged by the convergence lens 11 to be laser light $L_{13}$, which is irradiated onto the pit 10 formed on the optical disk 8.

Then, the circularly polarized laser light $L_{13}$ is reflected as rotating toward the reversed direction on the surface of the pit 10 based on a mirror symmetry principle and then becomes the circularly polarized laser light $L_{14}$. This reflected circularly polarized light $L_{14}$ is converged by the convergence lens 11 to be laser light $L_{16}$. The laser light $L_{16}$ is input to the fourth wavelength plate 22. The plate 22 converts it into the linearly polarized laser light and emits it. The emitted linearly polarized laser light $L_{16}$ becomes linearly polarized light of which polarized direction is orthogonal to the linearly polarized laser light $L_{10}$, which was reflected on the half mirror 7 and input to the fourth wavelength plate 22. This conversion of light prevents laser light irradiated on the optical disk 8 and laser light reflected on the optical disk 8 from interfering each other, avoiding deterioration of optical characteristics. Next, the laser light $L_{16}$ emitted from the fourth wavelength plate 22 is input to the half mirror 7 and transmits directly through the half mirror 7 and input to the photo detection device 12, which reads out information stored in the optical disk.

On the other hand, a predetermined amount of the laser light $L_{11}$ passed through the half mirror 7 is input to the monitor light detection device 13, which monitors emission level of laser light emitted from the three- wavelength laser device 20. In a optical pickup, it is necessary to maintain the emission level of laser light emitted from a laser element constant. The APC circuit (not shown in the figure) maintains the emission level of laser light constant by controlling a drive circuit of a laser element while the photo detection device for monitoring detects a part of laser light.

Next, a second embodiment of the optical-path compensating device in the invention is explained. In general, when laser light is irradiated onto a optical disk for reproducing data in the optical disk, laser light is required to have three-beams if light for reading and writing data, which is irradiated onto a bit and light for tracking, which is irradiated onto the groove on both sides of the pit are needed. In the second embodiment, laser light emitted from the optical-path compensating device is turned to be three beams. Hence, a grating is added to the side of emitting laser light from the optical-path compensating device, turning this linearly polarized light into three- beams.

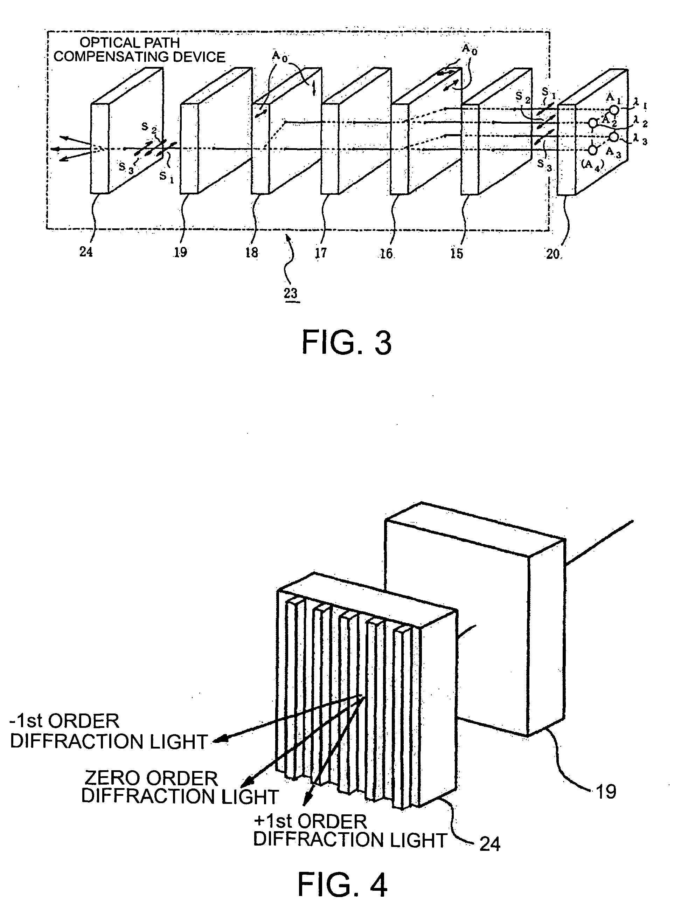

Fig. 3 is a perspective view showing an optical-path compensating device according to a second embodiment of the invention. An optical-path compensating device 23 comprises the first wavelength plate 15, the birefringent plate 16, the second wavelength plate 17, the birefringent plate 18, the third wavelength plate 19, and a grating 24 and is placed in front of a three wavelength laser device 20.

Here, in Fig.3, optical components constituting the optical-path compensating device 23 are placed with predetermined intervals. But, these optical components constituting the optical-path compensating device 23 may be attached and integrated to be a multi -layered structure in order to be downsized.

The second embodiment is basically the same of the first embodiment except that the grating 24 is placed in front of the third wavelength plate 19, which emits linearly polarized laser light. Hence, the operation of elements in the embodiment except the grating 24 is the same in the first embodiment and its explanation is omitted.

Fig.4 shows an example in which laser light is turned to three beams by adding the grating. In the grating 24, gratings having a predetermined refractive index are formed on a one surface of a substrate with predetermined depth and pitch. The grating refracts a predetermined wavelength laser light to generate a 0 order diffraction light beam as a main beam and two $\pm$ 1st order diffraction light beams as side beams. Here, in the optical-path compensating device 23 of the embodiment, linearly polarized laser light emitted from the third wavelength plate 19 is input to the grating 24 to refract it to form three laser light beams.

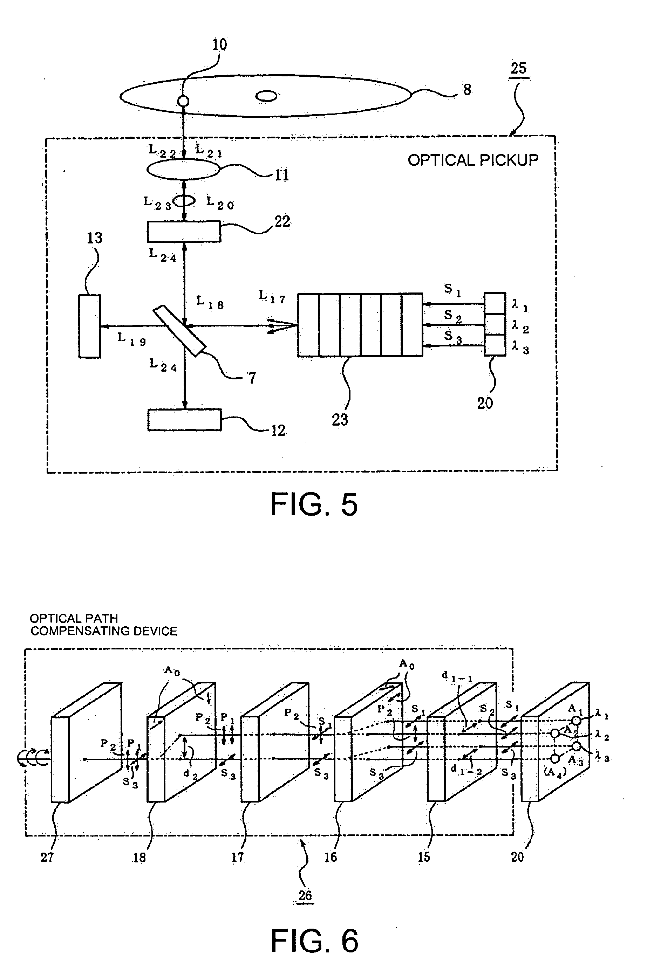

Fig. 5 is a schematic view of applying the optical-path compensating device 23 of the invention to an optical pick up. An optical pick up 25 comprises the three- wavelength laser device 20, an optical-path compensating device 23, the half mirror 7, the fourth wavelength plate 22, the objection lens 11, the photo-detecting device 12 and the monitor-photo-detecting device 13. The three- wavelength laser device 20 generates linearly polarized light including three different wavelengths of which polarized directions are the same, transmitting in parallel each other. The optical-path compensating device 23 corrects the optical path so that these laser light $S_1$, $S_2$ and $S_3$ transmit through the same optical path when the three- wavelength laser device 20 generates these three light. The half mirror 7 separates laser light with the predetermined ratio after outputting laser light from the optical path correction device 23. The fourth wavelength plate 22 inputs laser light reflected by 90° at the separating surface of the half mirror 7 and converts it into circularly polarized light. Further, the plate 22 converts circularly polarized laser light into linearly polarized light when light is reflected at an optical disk 8 and passes through an objection lens described later. The objection lens 11 converges circularly polarized laser light emitted from the fourth wavelength plate 22 into a pit 10 formed on the optical disk 8. Further it inputs laser light reflected on the pit 10. The photo-detecting device 12 detects linearly polarized laser light emitted from the fourth wavelength plate 22 via the half mirror 7. The monitor-photo-detecting device 13 monitors the emission level of the three- wavelength laser device 20 when light passes through the separation surface of the half mirror 7.

An optical pickup 25 using the optical-path compensating device 23 of the second embodiment is basically the same of optical pickup 21 using the optical-path compensating device 14 of the first embodiment except that the grating 24 is placed in front of the side of emitting linearly polarized laser light from the optical-path compensating device 14. Hence, a portion relating to the grating 24 is explained, but other elements, which are the same in the optical pickup 21 are not explained here.

The laser light $L_{17}$ emitted from the optical-path compensating device 23 is input to the half mirror 7. The half mirror 7 separates 90% of the laser light $L_{17}$ as laser light $L_{18}$, which is reflected by 90 °at the separating surface and also separates 10% of the laser light $L_{17}$ as laser light $L_{19}$, which transmits through the separating surface.

Next, the laser light $L_{18}$ having three beams reflected by the half mirror 7 is input into the fourth wavelength plate 22. The fourth wavelength plate 22 functions as a quarter wavelength plate, which converts three- wavelengths into circularly polarized laser light $L_{20}$. The circularly polarized laser light $L_{20}$ emitted from the fourth wavelength plate 22 is converged by the lens 11 to be laser light $L_{21}$, which is irradiated onto the pit 10 formed on the optical disk 8. Then, the circularly polarized laser light $L_{21}$ is reflected as rotating toward the reversed direction on the surface of the pit 10 based on a mirror symmetry principle and then becomes the circularly polarized laser light $L_{22}$. This reflected circularly polarized light $L_{22}$ is converged by the lens 11 to be laser light $L_{23}$. The laser light $L_{23}$ is input to the fourth wavelength plate 22. The plate 22 converts it into the linearly polarized laser light $L_{24}$ and emits it. The emitted linearly polarized laser light $L_{24}$ is light of which polarized direction is orthogonal to linearly polarized laser light $L_{18}$ which is reflected on the half mirror 7 and input into the fourth wavelength plate 22. Next, the laser light $L_{24}$ is input to the half mirror 7 and transmits directly through the half mirror 7 and input to the photo detection device 12, which reads information stored in the optical disk.

On the other hand, a predetermined amount of laser light $L_{19}$ passed through the half mirror 8 is input to the monitor light detection device 13, which monitors emission level of laser light emitted from the three- wavelength laser device 20. In an optical pickup, it is necessary to maintain the emission level of laser light emitted from a laser element constant. The APC circuit (not shown in the figure) maintains the emission level of laser light constant by controlling a drive circuit of a laser element while the photo detection device for monitoring detects a part of laser light. As described above, the optical pickup of the embodiment turns laser light, which is irradiated onto the optical disk, into three beams by using the optical-path compensating device 23.

Next, a third embodiment of the optical-path compensating device in the invention is explained. In the optical pickup 21 desciribed before, laser light irradiated on the optical disk 8 was turned to be circularly polarized light by using the fourth wavelength plate. This conversion of light prevented laser light irradiated on the optical disk 8 and laser light reflected on the optical disk 8 from interfering each other, avoiding deterioration of optical characteristics. On the other hand, the feature of the third embodiment is that laser light emitted from the optical-path compensating device is circularly polarized light and the fourth wavelength plate is removed from the optical pickup.

Fig. 6 is a perspective view showing an optical-path compensating device according to the third embodiment of the invention. A optical-path compensating device 26 comprises the first wavelength plate 15, the birefringent plate 16, the second wavelength plate 17, the birefringent plate 18 and a fifth wavelength plate 27, and is placed in front of the three- wavelength laser device 20. In the third embodiment, functions of the three- wavelength laser device 20,the first wavelength plate 15, the birefringent plate 16, the second wavelength plate 17, and the birefringent plate 18 are the same described in Fig.1 and these explanations are omitted here. Function of the fifth wavelength plate 27 is explained.

These laser light $P_1$, $P_2$ and $S_3$ passed through the second birefringent plate 18 are input to the fifth wavelength plate 27. The fifth wavelength plate 27 is made of a birefringent crystal or a polymer film, making the phase difference between an extraordinary component and an ordinary component of linearly polarized light be 90 ° when three linearly polarized light are input to the plate 27 through the second birefringent plate 18. Hence, light emitted from the fifth wavelength plate 27 becomes circularly polarized light by integrating an extraordinary component and an ordinary component of which phases are shifted each other by 90 °.

Here, the fifth wavelength plate 27 functions as a quarter wavelength plate. Namely the thickness of the fifth wavelength plate 27 is arranged so as to give a phase difference $\pi/2(2r-1)$ to the laser light $P_1$, a phase difference $\pi/2(2r-1)$ to the laser light $P_2$ and a phase difference $\pi/2(2r-1)$ to the laser light $S_3$.

As described above, the optical-path compensating device of the third embodiment transmits three- wavelengths laser light on the same optical path and makes all three emitted laser light be circularly polarized light. Here, in Fig. 6 showing the operation of the optical-path compensating device, optical components constituting the optical-path compensating device 26 are placed with predetermined intervals. But, these optical components constituting the optical-path compensating device 26 may be attached and integrated to be a multi -layered structure in order to be downsized.

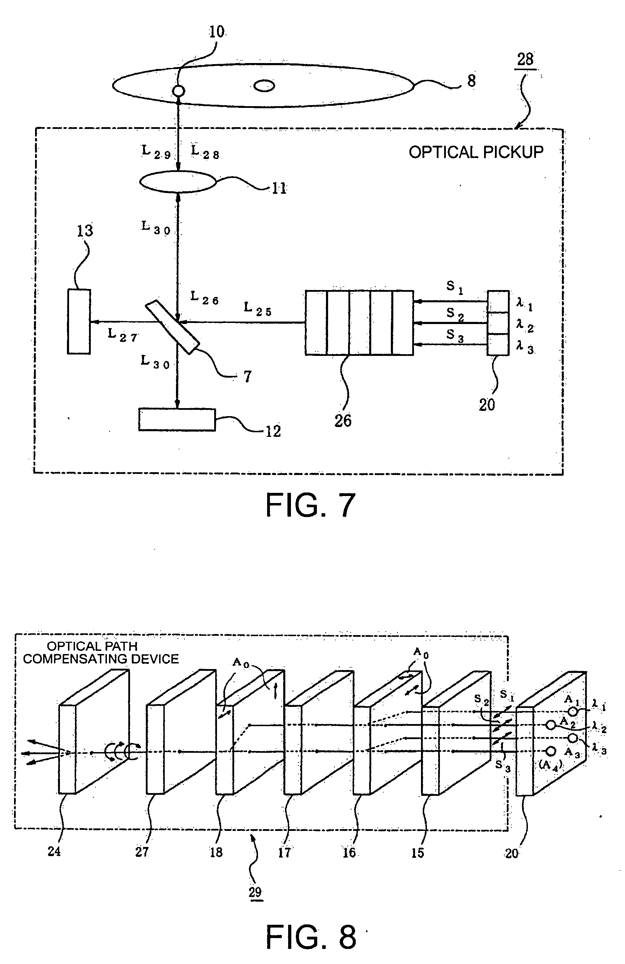

Next, an example of applying the optical-path compensating device 26 of the invention to an optical pick up is explained. Fig. 7 is a schematic view of applying the optical-path compensating device 26 of the invention to an optical pick up. An optical pick up 28 comprises the three- wavelength laser device 20, the optical-path compensating device 26, the half mirror 7, the objection lens 11, the photo-detecting device 12 and the monitor-photo-detecting device 13. The three- wavelength laser device 20 generates linearly polarized light including three different wavelengths of which polarized directions are the same, transmitting in parallel each other. The optical-path compensating device 26 compensates the optical path so that these laser light $S_1$, $S_2$ and $S_3$ transmit through the same optical path, and generates these three light as circularly polarized light. The half mirror 7 separates laser light with the predetermined ratio after outputting laser light from the optical path compensating device 26. The objection lens 11 inputs laser light reflected by 90 °on the separation surface of the wavelength plate 7 and converges it into a pit 10 formed on the optical disk 8. Further the lens inputs laser light reflected on the pit 10. The photo-detecting device 12 detects laser light passed through the objection lens 11and went via the half mirror 7. The monitor-photo-detecting device 13 monitors the emission level of the three- wavelength laser device 20 when light passes through the separation surface of the half mirror 7.

According to Fig.7, the three- wavelength laser device 20 emits the laser light $S_1$ having the wavelength 650nm, the laser light $S_2$ having the wavelength 780 nm and the laser light $S_3$ having the wavelength 405 nm. These laser light are linearly polarized light of which polarized directions are the same, transmit in parallel each other with the predetermined optical path interval. These laser light enter into the optical-path compensating device 26. The optical-path compensating device 26 as described above compensates the optical path by using a plurality of wavelength plates and birefringent plates so that these laser light $S_1$, $S_2$ and $S_3$ transmit through the same optical path, and generates these three light as circularly polarized light. These three- circularly polarized light are called as laser light $L_{25}$.

Next, the laser light $L_{25}$ emitted from the optical-path compensating device 26 is input into the half mirror 7. For example, the half mirror 7 separates 90% of the laser light $L_{25}$ as laser light $L_{26}$, which is reflected by 90 °at the separating surface and also separates 10% of the laser light $L_{25}$ as laser light $L_{27}$, which transmits through the separating surface. Further, the laser light $L_{26}$ reflected on the half mirror 7 is converged by the convergence lens 11 to be laser light $L_{28}$, which is irradiated onto the pit 10 formed on the optical disk 8.

Then, the circularly polarized laser light $L_{28}$ is reflected as rotating toward the reversed direction on the surface of the pit 10 based on a mirror symmetry principle and then becomes the circularly polarized laser light $L_{29}$. This reflected circularly polarized light $L_{29}$ is converged by the convergence lens 11 to be laser light $L_{30}$. The laser light $L_{30}$ is input to the half mirror 7. The laser light $L_{30}$ passes through the half mirror 7 and enters into the photo detection device 12, which reads information stored in the optical disk.

On the other hand, a predetermined amount of laser light $L_{27}$ passed through the half mirror 7 enters into the monitor light detection device 13, which monitors emission level of laser light emitted from the three- wavelength laser device 20. In a optical pickup, it is necessary to maintain the emission level of laser light emitted from a laser element constant. The APC circuit (not shown in the figure) maintains the emission level of laser light constant by controlling a drive circuit of a laser element while the photo detection device for monitoring detects a part of laser light.

Next, a fourth embodiment of the optical-path compensating device in the invention is explained. As described in the second embodiment of the optical path compensating device, in general, when laser light is irradiated onto a optical disk for reproducing data in the optical disk, laser light is required to have three- beams if light for reading and writing data, which is irradiated onto a bit and light for tracking, which is irradiated onto the groove on both sides of the pit are needed. The fourth embodiment shows that light emitted from the optical path correction device is turned to three beams. Hence, a grating is added to the side of emitting laser light from the optical-path compensating device, turning this circularly polarized light into three beams.

Fig. 8 is a perspective view showing an optical-path compensating device according to the fourth embodiment of the invention. An optical-path compensating device 29 comprises the first wavelength plate 15, the birefringent plate 16, the second wavelength plate 17, the birefringent plate 18, the fifth wavelength plate 27, and the grating 24 and is placed in front of the three- wavelength laser device 20.

Here, in Fig.8, optical components constituting the optical-path compensating device 29 are placed with predetermined intervals. But, these optical components constituting the optical-path compensating device 29 may be attached and integrated to be a multi -layered structure in order to be downsized.

The fourth embodiment is basically the same of the third embodiment shown in Fig.6 except that the grating 24 is placed in front of the fifth wavelength plate 27, which emits circularly polarized laser light. The function of the grating 24 is the same described in Fig.4. The optical-path compensating device 29 compensates the optical path of laser light having three different wavelengths emitted from the three- wavelength laser device 20 of which polarized directions are the same, transmitting in parallel each other so that these laser light transmit through the same optical path.

Circularly polarized light emitted from the fifth wavelength plate 27 is input into the grating 24, which refracts the light to form three beams and emits them.

Fig. 9 is a schematic view of applying the optical-path compensating device 29 of the invention to an optical pick up. An optical pick up 30 comprises the three- wavelength laser device 20, the optical-path compensating device 29, the half mirror 7, the objection lens 11, the photo-detecting device 12 and the monitor-photo-detecting device 13. The three- wavelength laser device 20 generates linearly polarized light including three different wavelengths of which polarized directions are in parallel each other. The optical-path compensating device 29 compensates the optical path so that these laser light $S_1$, $S_2$ and $S_3$ transmit through the same optical path, and generates these three light as circularly polarized light having three beams. The half mirror 7 separates laser light with the predetermined ratio after outputting laser light from the optical path compensating device 29. The objection lens 11 inputs laser light reflected by 90 °on the separation surface of the wavelength plate 7 and converges it into a pit 10 formed on the optical disk 8. Further the lens inputs laser light reflected on the pit 10. The photo-detecting device 12 detects laser light passed through the objection lens 11 and went via the half mirror 7. The monitor-photo-detecting device 13 monitors the emission level of the three-wavelength laser device 20 when light passes through the separation surface of the half mirror 7.

An optical pickup 30 using the optical-path compensating device 29 of the fourth embodiment is basically the same of optical pickup 26 using the optical-path compensating device 26 of the third embodiment except that the grating 24 is placed in front of the side of emitting laser light from the optical-path compensating device 26. Hence, a portion relating to the grating 24 is explained, but other elements, which are the same in the optical pickup 28, are not explained here. The laser light $L_{31}$ emitted from the optical-path compensating device 29 is input to the half mirror 7. The half mirror 7 separates 90% of the laser light $L_{31}$ as laser light $L_{32}$, which is reflected by 90 °at the separating surface and also separates 10% of the laser light $L_{31}$ as laser light $L_{33}$, which transmits through the separating surface.

Further, the laser light $L_{32}$ reflected by the half mirror 7 is converged by the convergence lens 11 to be laser light $L_{34}$, which is irradiated onto the pit 10 formed on the optical disk 8. Then, the circularly polarized laser light $L_{34}$ is reflected as rotating toward the reversed direction on the surface of the pit 10 based on a mirror symmetry principle and then becomes the circularly polarized laser light $L_{35}$. Next, the reflected circularly polarized laser light $L_{35}$ is converged into the convergence lens 11 to be laser light $L_{36}$, which is input to the half mirror 7 and transmits directly through the half mirror 7 and is input to the photo detection device 12. This device reads information stored in the optical disk.

On the other hand, a predetermined amount of the laser light $L_{33}$ passed through the half mirror 7 is input to the monitor light detection device 13, which monitors emission level of laser light emitted from the three- wavelength laser device 20. In a optical pickup, it is necessary to maintain the emission level of laser light emitted from a laser element constant. The APC circuit (not shown in the figure) maintains the emission level of laser light constant by controlling a drive circuit of a laser element while the photo detection device for monitoring detects a part of laser light. As described above, the optical pickup of the embodiment turns circularly polarized laser light, which is irradiated onto the optical disk, into three beams by using the optical-path compensating device 29.

**Claims**

1. An optical-path compensating device comprising:

   a first wavelength plate inputting linearly polarized light that includes three different wavelengths $\lambda_1$, $\lambda_2$ and $\lambda_3$ of which polarized directions are the same and optical paths are in parallel;
   a first birefringent plate inputting the linearly polarized light including the three different wavelengths that were emitted from the first wavelength plate;
   a second wavelength plate inputting the linearly polarized light including the three different wavelengths that transmitted through the first birefringent plate;
   a second birefringent plate inputting the linearly polarized light including the three different wavelengths that were emitted from the second wavelength plate; and a third wavelength plate inputting the linearly polarized light including the three different wavelengths that transmitted through the second birefringent plate,

   wherein the first wavelength plate gives a phase difference $2\pi m_1$ to the linearly polarized light including the wavelength $\lambda_1$, a phase difference $\pi(2n_1-1)$ to the linearly polarized light including the wavelength $\lambda_2$ and a phase difference $2\pi q_1$ to the linearly polarized light including the wavelength $\lambda_3$ respectively ($m_1$, $n_1$ and $q_1$ are integers),
   wherein the first birefringent plate is arranged so as to make the linearly polarized light including the wavelength $\lambda_2$ be an ordinary ray and the linearly polarized light including the wavelengths $\lambda_1$ and $\lambda_3$ be an extraordinary ray, when these linearly polarized light are emitted from the first wavelength plate along the optical axis of the first birefringent plate,
   wherein the following equation is satisfied:

$$t_1 = d_1 \cdot \left| (n0^2 \tan \theta + ne^2)/((n0^2 \cdot ne^2) \tan \theta) \right|,$$

where a distance for compensating an optical path is $d_1$ , a refractive index of the birefringent plate to an ordinary ray is n0, a refractive index of the birefringent plate to an extraordinary ray is ne, an angle between an optical axis and a normal line to a main plane of the birefringent plate is $\theta$ and the thickness of the birefringent plate is $t_1$, wherein the second wavelength plate gives a phase difference $\pi(2m_2-1)$ to the linearly polarized light including the wavelength $\lambda_1$, a phase difference $2\pi n_2$ to the linearly polarized light including the wavelength $\lambda_2$ and a phase difference $2\pi q_2$ to the linearly polarized light including the wavelength $\lambda_3$ respectively ($m_2$, $n_2$ and $q_2$ are integers), wherein the second birefringent plate is arranged so as to make the linearly polarized light including the wavelengths $\lambda_1$ and $\lambda_2$ be an extraordinary ray and the linearly polarized light including the wavelength $\lambda_3$ be an ordinary ray, where these linearly polarized light are emitted from the first wavelength plate along the optical axis of the second birefringent plate,

wherein the following equation is satisfied:

$$t_2 = d_2 \cdot \left| (n0^2 \tan \theta + ne^2)/((n0^2 \cdot ne^2) \tan \theta) \right|,$$

where a distance for compensating an optical path is $d_2$, a refractive index of the birefringent plate to an ordinary ray is n0, a refractive index of the birefringent plate to an extraordinary ray is ne, an angle between an optical axis and a normal line to a main plane of the birefringent plate is $\theta$ and the thickness of the birefringent plate is $t_2$, wherein the third wavelength plate gives a phase difference $\pi(2m_3-1)$ to the liner polarized light including the wavelength $\lambda_1$, a phase difference $\pi(2n_3-1)$ to the liner polarized light including the wavelength $\lambda_2$ and a phase difference $2\pi q_3$ to the liner polarized light including the wavelength $\lambda_3$ respectively ($m_3$, $n_3$ and $q_3$ are integers).

2. The optical-path compensating device according to claim 1, further comprising a grating located at the side of emitting laser light from the optical compensating device , diffracting the input linearly polarized light including different wavelengths to form three light beams such as a zero order diffraction light beam and $\pm$ 1st order diffraction light beams.

3. The optical-path compensating device according to claim 1 or 2, wherein the first wavelength plate, the first birefringent plate, the second wavelength plate and the second birefringent plate are attached together and integrated.

4. The optical-path compensating device according to claim 1 or 2, wherein the first wavelength plate, the first birefringent plate, the second wavelength plate , the second birefringent plate ,the third wavelength plate and the grating are attached together and integrated.

5. The optical-path compensating device according to any one of the preceding claims 1 to 4, wherein the first wavelength plate, the second wavelength plate, and the third wavelength plate are made of birefringent crystals.

6. The optical-path compensating device according to any one of the preceding claims, wherein the first birefringent plate and the second birefringent plate are made of lithutm niobate or rutile.

7. The optical-path compensating device according to any one of the preceding claims, wherein the linearly polarized light including the wavelength $\lambda_1$ is laser light having 660nm wavelength, the linearly polarized light including the wavelength $\lambda_2$ is laser light having 785nm wavelength , and the linearly polarized light including the wavelength $\lambda_3$ is laser light having 405nm wavelength.

8. An optical pickup comprising:

   a light source generating linearly polarized light including three different wavelengths of which polarized directions are the same and optical paths are in parallel;
   an optical-path compensating device according to any one of the preceding claims 1 to 7, inputting three- linearly polarized light from the light source;
   a fourth wavelength plate inputting a light beam emitted from the optical light path; and
   an objective lens converging light beam emitted from the fourth wavelength plate into an optical memory medium.

9. An optical-path compensating device comprising:

a first wavelength plate inputting linearly polarized light that includes three different wavelengths $\lambda_1$, $\lambda_2$ and $\lambda_3$ of which polarized directions are the same and optical paths are in parallel;
a first birefringent plate inputting the linearly polarized light including the three different wavelengths that were emitted from the first wavelength plate;
a second wavelength plate inputting the linear polarized light including the three different wavelengths that transmitted through the first birefringent plate; a second birefringent plate inputting the linear polarized light including the three different wavelengths that were emitted from the second wavelength plate;
a fifth wavelength plate inputting the linearly polarized light including the three different wavelengths that transmitted through the second birefringent plate,

wherein the first wavelength plate gives a phase difference $2\pi m_1$ to the linearly polarized light including the wavelength $\lambda_1$, a phase difference $\pi(2n_1-1)$ to the linearly polarized light including the wavelength $\lambda_2$ and a phase difference $2\pi q_1$ to the linearly polarized light including the wavelength $\lambda_3$ respectively ($m_1$, $n_1$ and $q_1$ are integers),
wherein the first birefringent plate is arranged so as to make the linear polarized light including the wavelength $\lambda_2$ be an ordinary ray and the linear polarized light including the wavelengths $\lambda_1$ and $\lambda_3$ be an extraordinary ray, when these linear polarized light are emitted from the first wavelength plate along the optical axis of the first birefringent plate,
wherein the following equation is satisfied:

$$t_1=d_1 \cdot |(n0^2 \tan \theta+ne^2)/((n0^2 \cdot ne^2) \tan \theta)|,$$

where a distance for compensating an optical path is $d_1$, a refractive index of the birefringent plate to an ordinary ray is n0, a refractive index of the birefringent plate to an extraordinary ray is ne, an angle between an optical axis and a normal line to a main plane of the birefringent plate is $\theta$ and the thickness of the birefringent plate is $t_1$.,
wherein the second wavelength plate gives a phase difference $\pi(2m_2-1)$ to the linearly polarized light including the wavelength $\lambda_1$, a phase difference $2\pi n_2$ to the linearly polarized light including the wavelength $\lambda_2$ and a phase difference $2\pi q_2$ to the linearly polarized light including the wavelength $\lambda_3$ respectively ($m_2$, $n_2$ and $q_2$ are integers),
wherein the second birefringent plate is arranged so as to make the linear polarized light including the wavelengths $\lambda_1$ and $\lambda_2$ be an extraordinary ray and the linear polarized light including the wavelength $\lambda_3$ be an ordinary ray, where these linear polarized light are emitted from the first wavelength plate along the optical axis of the second birefringent plate,
wherein the following equation is satisfied:

$$t_2=d_2 \cdot |(n0^2 \tan \theta+ne^2)/((n0^2 \cdot ne^2) \tan \theta)|,$$

where a distance for compensating an optical path is $d_2$, a refractive index of the birefringent plate to an ordinary ray is n0, a refractive index of the birefringent plate to an extraordinary ray is ne, an angle between an optical axis and a normal line to a main plane of the birefringent plate is $\theta$ and the thickness of the birefringent plate is $t_2$,
wherein the fifth wavelength plate generates a phase difference $\pi/2 (2r-1)$ (r is an integer) for linearly polarized light having wavelengths $\lambda_1$, $\lambda_2$ and $\lambda_3$.

10. The optical-path compensating device according to claim 9, further comprising a grating located at the side of emitting laser light from the optical compensatingcompensating device , diffracting the input linear polarized light including different wavelengths to form three light beams such as a zero order diffraction light beam and $\pm$ 1st order diffraction light beams.

11. The optical-path compensating device according to claim 9 or 10, wherein the first wavelength plate, the first birefringent plate, the second wavelength plate, the second birefringent plate and the fifth wavelength plate are attached together and integrated.

12. The optical-path compensating device according to claim 10, wherein the first wavelength plate, the first birefringent plate, the second wavelength plate , the second birefringent plate, the fifth wavelength plate and the grating are attached together and integrated.

13. The optical-path compensating device according to any one of the preceding claims 9 to 12, wherein the first wavelength plate, the second wavelength plate, and the fifth wavelength plate are made of birefringent crystals.

14. The optical-path compensating device according to any one of the preceding claims 9 to 13, wherein the first birefringent plate and the second birefringent plate are made of lithum niobate or rutile.

15. The optical-path compensating device according to any one of the preceding claims 9 to 14, wherein the linearly polarized light including the wavelength $\lambda_1$ is a laser beam having 660nm wavelength, the linearly polarized light including the wavelength $\lambda_2$ is a laser beam having 785nm wavelength , and the linearly polarized light including the wavelength $\lambda_3$ is a laser beam having 405nm wavelength.

16. An optical pickup comprising:

a light source generating linearly polarized light including three different wavelengths of which polarized directions are the same and optical paths are in parallel;
an optical-path compensating device according to any one of the preceding claims 9 to 15 , inputting three-linearly polarized light from the light source; and
an objective lens converging light emitted from the optical path compensating device into an optical memory medium.

FIG. 1

FIG. 2

**FIG. 3**

**FIG. 4**

FIG. 5

OPTICAL PATH
COMPENSATING DEVICE

FIG. 6

## FIG. 7

## FIG. 8

FIG. 9

FIG.10

FIG.11